# EUROPEAN PATENT APPLICATION

(11) **EP 4 556 667 A1**
(43) Date of publication of application: **21.05.2025**
(21) Application number: 22765930.7
(22) Date of filing: 15.07.2022
(51) Int. Cl.: E05F 15/689, B60J 3/04, B60R 16/03, H02G 11/02

(54) **RETRACTABLE ELECTRIC CHARGING DEVICE**

(71) Applicant: Inertim Research S.L., 09004 Burgos (ES)
(72) Inventor: MARTÍNEZ MORAL, Francisco Javier, 09002 Burgos (ES)
(74) Representative: Herrero & Asociados, S.L.
(86) International application number: PCT/ES2022/070462
(87) International publication number: WO 2024/013409

(57) **Abstract**

Electric charging device (100) for a window lift system (1000) for vehicle doors, wherein the window lift system (1000) comprises an active system (1010) comprising an active glass window (1020) and window wiring (1030) comprising a connector (1040), and a rail (1050) on which said active glass window (1020) moves, wherein the active glass window (1020) is configured to darken by receiving a current flow through the window wiring (1030), wherein the electric charging device (100) comprises a cable dispenser (110) comprising retractable means, an electric cable (120) configured to be housed in the cable dispenser (110), wherein the cable dispenser (110) allows the elongation and retraction of the electric cable (120) by means of the retractable means during the movement of the active glass window (1020) along the rail (1050), wherein the electric cable (120) comprises a first end (A) connectable to a current source providing the current flow and a second end (B) connected to a counter-connector (130), wherein the counter-connector (130) is configured to be connectable to the connector (1040) of the active system (1010) establishing an electrical circuit between the current source and the active glass window (1020) allowing the passage of the current flow, and wherein the current flow of the electrical circuit acts on the active glass window (1020) causing the darkening of the active glass window (1020).

## Description

### Object of the invention

The object of the present invention relates to electric charging devices for window lift systems for vehicle doors and to window lift systems comprising said electric charging devices.

### Background of the invention

Automotive side glasses have traditionally been clear, or in some cases permanently tinted.

Recently, technological developments from other technical fields such as those of architecture or decoration have reached the automobile, as is the case with active glasses that darken on demand and by receiving a current flow.

Active glasses have started to make their way into the sunroof of vehicles. However, there are technical problems when it comes to inserting active glasses in the side doors of vehicles, since active glasses are actuated by a current flow and conventional glasses in side doors of vehicles are mobile and located on a window lift system that allows its movement (i.e. up and down). Therefore, the substitution of a conventional glass for an active glass in window lift systems, as well as applying said current flow poses complex technical difficulties.

The present invention proposes a solution that solves the previously mentioned technical drawbacks for the incorporation of active glasses in the side doors of vehicles.

### Description of the invention

The present invention obtains a solution to the technical problems associated with the implementation of active glasses in the doors of vehicles by means of a retractable cable that allows an electric current flow to the active glass in a way that minimizes mechanical and non-mechanical problems to which the glass of a window lift system is subjected: noise, vibrations, humidity, direct water intake, dust, saline environment (corrosion), etc.

Thus, in a first aspect, the present invention relates to electric charging devices for window lift systems for vehicle doors. The window lift system comprises an active system comprising an active glass window and window wiring comprising a connector. Furthermore, the window lift system comprises a rail on which said active glass window moves, wherein the active glass window is configured to darken by receiving a current flow through the window wiring and the connector.

The electric charging device comprises a cable dispenser comprising retractable means and an electric cable configured to be housed in the cable dispenser, wherein the cable dispenser allows the elongation and retraction of the electric cable by means of the retractable means during the movement of the active glass window along the rail. The cable dispenser allows the extension of the cable and its collection, occupying a very limited space inside the door.

The electric cable comprises a first end connectable to a current source providing current flow and a second end connected to a counter-connector. The counter-connector is configured to be connectable to the connector of the active system, establishing an electrical circuit between the current source and the active glass window, allowing the passage of the current flow, and wherein the current flow of the electrical circuit acts on the active glass window causing the darkening of the active glass window.

In several embodiments of the invention, the cable dispenser is configured to be connectable to the rail, or to a drag car of the active glass window, or to the active glass window by means of a bracket configured to support the cable dispenser, or to a vehicle door.

In several embodiments of the invention, the first end of the electric cable may comprise a charging connector connectable to the energy source.

In several embodiments of the invention, the cable dispenser may comprise a passive element configured to reduce the mechanical stress on the electric cable and prevent the connection between the connector and the counter-connector from being interrupted. The passive element may comprise one or more fixing clips, flanges or fixing elements, preferably slots or labyrinths, and wherein the one or more fixing clips is connectable to the vehicle door.

A second aspect of the invention relates to window lift systems for vehicle doors. The window lift systems comprise the electric charging device according to the first aspect of the invention, an active system comprising an active glass window and window wiring comprising a connector, an active glass window drag car and a rail on which said active glass window moves by means of the drag car.

In particular embodiments, the cable dispenser of said electric charging devices can be connected to the rail, or to the drag car of the active glass window, or to the active glass window by means of a bracket configured to support the cable dispenser, or to a vehicle door.

In particular embodiments, the window lift system further comprises an engine configured to cause the movement of the active glass window on said rail by means of the drag car.

### Description of the drawings

To complement the description that is being made and in order to help a better understanding of the characteristics of the electric charging devices and the window lift systems according to the present invention, a set of drawings is attached as an integral part of said description where, by way of illustration and not limitation, the following has been represented:
Figure 1 shows the electric charging device according to the present invention for a window lift system for vehicle doors.
Figure 2 shows a first view of a first example of a window lift system comprising the electric charging device according to the present invention, wherein the cable dispenser is established on the rail of the window lift system.
Figure 3 shows a second view of the first example of the window lift system shown in Figure 2.
Figure 4 shows a second example of a window lift system comprising the electric charging device according to the present invention, wherein the cable dispenser of the electric charging device is established on the window drag car.
Figure 5 shows a third example of a window lift system comprising the electric charging device according to the present invention, wherein the cable dispenser of the electric charging device is established on the window.
Figure 6 shows a fourth example of a window lift system comprising the electric charging device according to the present invention, wherein the cable dispenser of the electric charging device is established in a vehicle door.

### Preferred embodiment of the invention

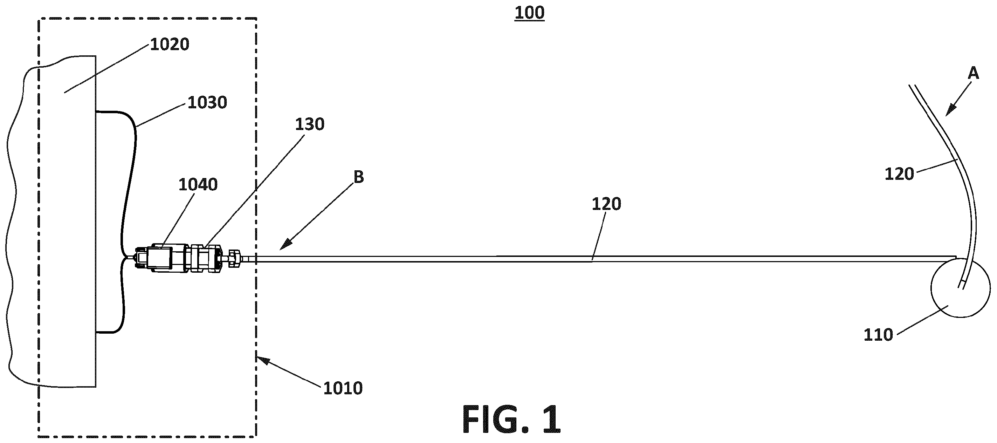

Figure 1 shows an electric charging device (100) according to the present invention for a window lift system (1000) for vehicle doors.

The window lift system (1000) comprises an active system (1010) comprising an active glass window (1020) and window wiring (1030) comprising a connector (1040).

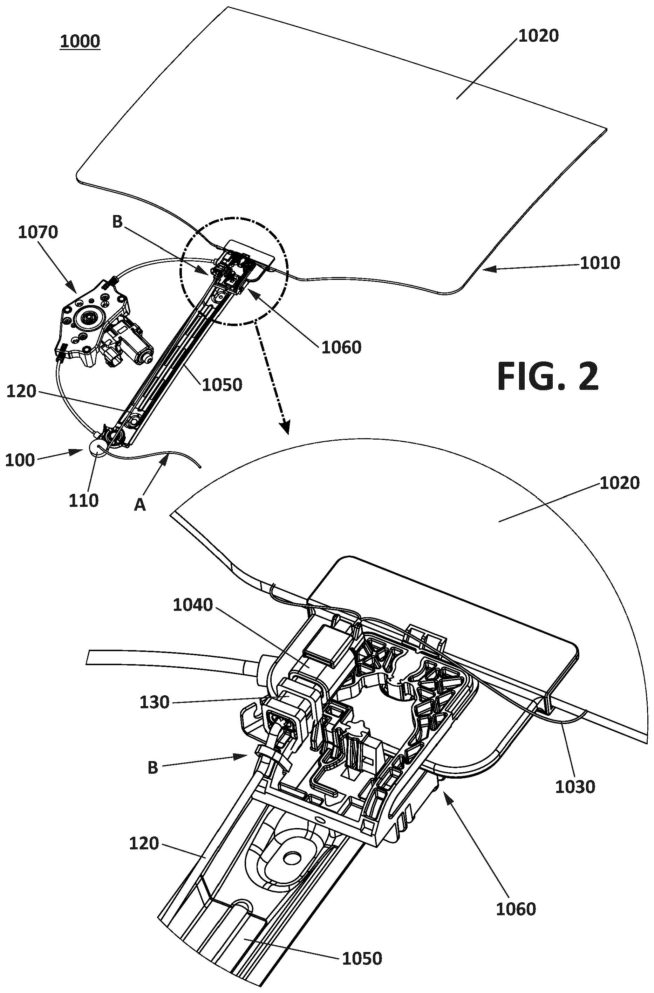

The window lift system (1000) comprises a rail (1050) and a drag car (1060) connected to the active glass window (1020). The drag car (1060) allows the movement of the active glass window (1020) through said rail (1050) (both the window lift system (1000) and the rail (1050) and the drag car (1060) are shown, for example, in Figure 2).

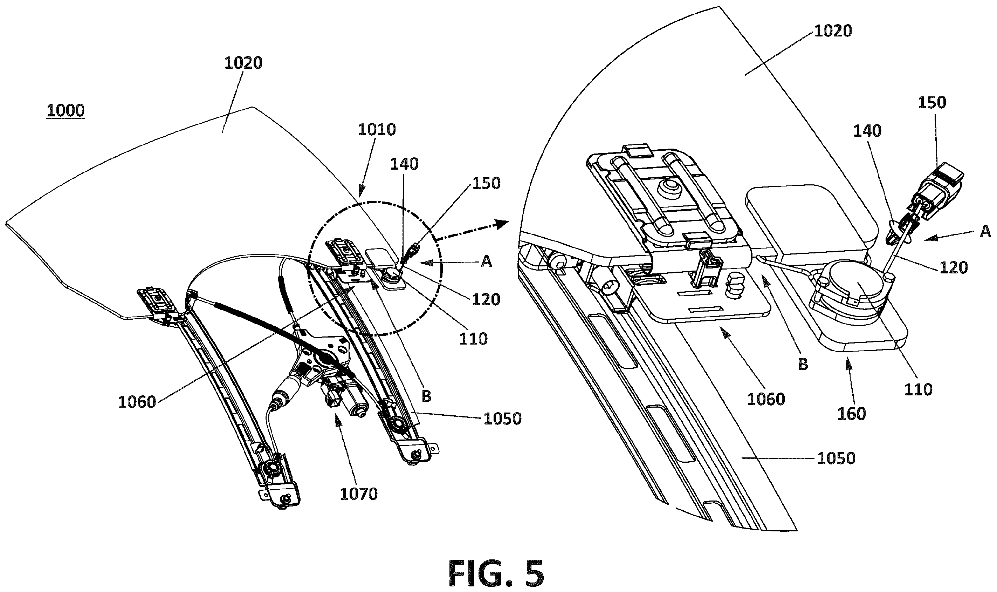

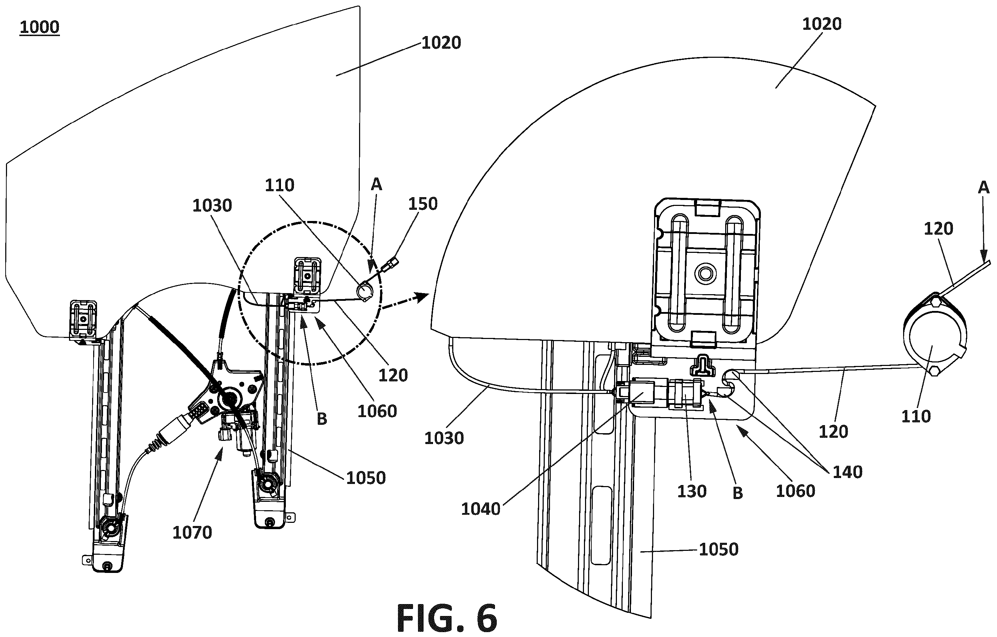

The electric charging device (100) comprises a cable dispenser (110) comprising retractable means. As shown in several embodiments of the invention, the cable dispenser (110) can be attached to different parts of the window lift system (1000), and also, for example, the cable dispenser (110) can be attached to the active glass window (1020) (see Figure 5), or to the vehicle door (see Figure 6).

The electric charging device (100) comprises an electric cable (120) configured to be housed in the cable dispenser (110) in a "yo-yo" manner. The cable dispenser (110) allows the extension and retraction of the electric cable (120) by means of the retractable means included in the cable dispenser (110) during the movement of the active glass window (1020).

As shown in Figure 1, the electric cable (120) comprises a first end (A) connectable to a current source (not shown in Figure 1) that provides a current flow and a second end (B) connected to a counter-connector (130) of the electric charging device (100). The current source may be part of the vehicle with doors.

Counter-connector (130) is configured to be connectable to connector (1040) of active system (1010). In Figure 1, the counter-connector (130) of the electric charging device (100) is shown connected to the connector (1040).

The connection of the counter-connector (130) and of the connector (1040) establishes an electrical circuit between the current source of the vehicle and the active glass window (1020) allowing the passage of the current flow. The current flow of the electrical circuit actuates the active glass window 1020 causing the darkening of the active glass window 1020.

Figure 2 shows a first view of a first example of a window lift system (1000) comprising the electric charging device (100) according to the present invention. In this first example, the cable dispenser (110) is established in the rail (1050) of the window lift system (1000).

Figure 2 shows the active system 1010 comprising the active glass window 1020 and window wiring 1030 comprising a connector 1040 (shown in the detailed view of Figure 2).

Figure 2 shows the rail (1050) and the drag car (1060) connected to the active glass window (1020). The drag car (1060) allows the movement of the active glass window (1020) through said rail (1050).

During the movement of the active glass window (1020) through the rail (1050), the cable dispenser (110) of the electric charging device (100) allows the elongation and retraction of the electric cable (120) by means of the retractable means of the cable dispenser (110) during the movement of the active glass window (1020).

The window lift system (1000) allows the movement of the active glass window (1020) in an automated way thanks to the engine (1070) that is also seen in Figure 2.

The counter-connector (130) of the electric cable (120) is connected to the connector (1040) of the active system (1010) by the end (B) of the electric cable (120). As indicated above, the end (A) is connectable to a current source (not shown in Figure 2) that provides the current flow.

In the detailed view of Figure 2, the connection between the counter-connector (130) of the electric charging device (100) and the connector (1040) of the active system (1010) is shown more clearly, as well as the drag car (1060), the rail (1050), the active glass window (1020) and the window wiring (1030).

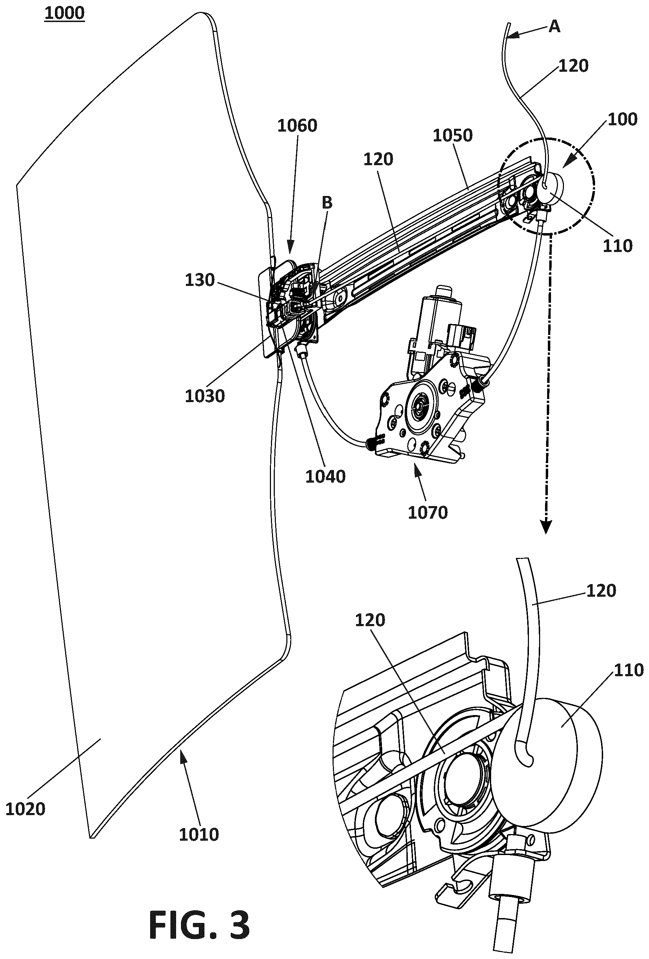

Figure 3 shows a second view of the first example of the window lift system (1000) shown in Figure 2. Figure 3 shows the counter-connector (130) of the electric charging device (100) and the connector (1040) of the active system (1010).

In the detailed view of Figure 3, the cable dispenser (110) of the electric charging device (100) is shown more clearly, which allows the extension and retraction of the electric cable (120) by means of the retractable means of the cable dispenser (110) during the movement of the active glass window (1020) through the rail (1050) by means of the drag car (1060).

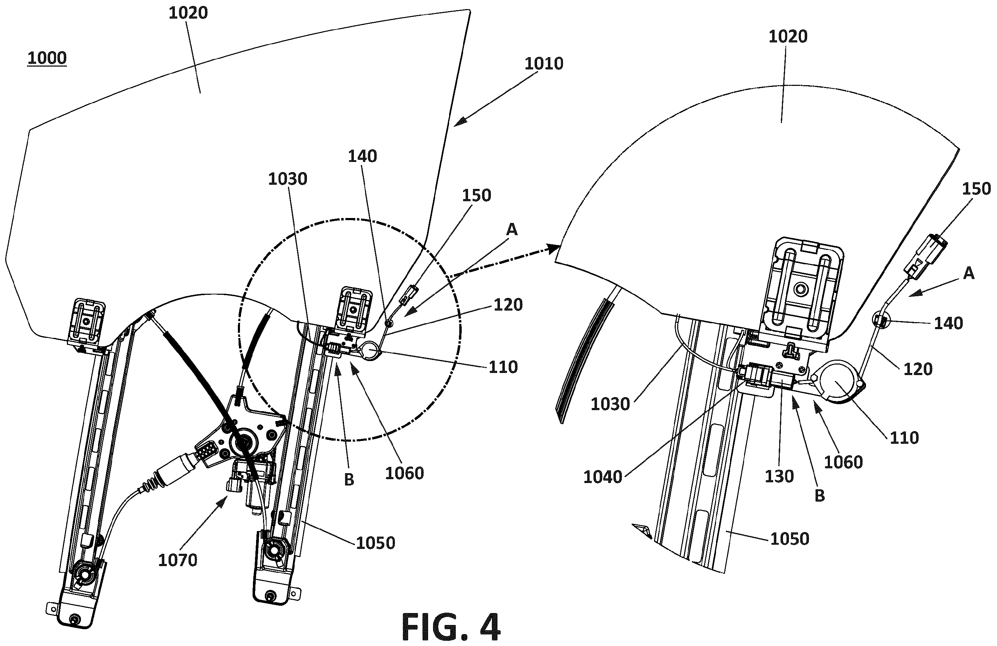

Figure 4 shows a second example of a window lift system (1000) comprising the electric charging device (100) according to the present invention, wherein the cable dispenser (110) of the electric charging device is established on the drag car (1060) of the active glass window (1020).

In the detailed view of Figure 4, the cable dispenser (110) of the electric charging device (100) established on the drag car (1060) is shown more clearly, as well as the electric cable (120), the connection between the counter-connector (130) of the electric charging device (100) and the connector (1040) of the active system (1010).

Additionally, in the detailed view of Figure 4 a passive element (140) configured to reduce mechanical stress on the electric cable (120) is shown. The passive element (140) can comprise fixing clips, flanges or fixing elements, preferably slots or labyrinths. The fixing clips can be attached to the vehicle door. In this example, the passive element (140) is a fixing clip connectable to a vehicle door (not shown in the Figure).

Additionally, in the detailed view of Figure 4 a charging connector (150) connectable to the energy source is shown at the first end (A) of the electric cable (120). The charging connector (150) allows the connection of the electric cable (120) to the power supply on the battery.

Figure 5 shows a third example of a window lift system (1000) comprising the electric charging device (100) according to the present invention, wherein the cable dispenser (110) of the electric charging device (100) is established on the active glass window (1020) through a bracket (160).

Shown in the detailed view of Figure 5 is a passive element (140) configured to reduce mechanical stress on the electric cable (120). In this example, the passive element 140 is a fixing clip connectable to a vehicle door (not shown in the Figure).

Figure 6 shows a fourth example of a window lift system (1000) comprising the electric charging device (100) according to the present invention, wherein the cable dispenser (110) of the electric charging device (100) is configured to be connectable to the door of a vehicle (said door is not shown in Figure 6).

Shown in the detailed view of Figure 6 is a passive element (140) configured to reduce mechanical stress on the electric cable (120). In this example, the passive element (140) has been established on the drag car (1060).

In the detailed view of Figure 6, the cable dispenser (110) of the electric charging device (100) is also shown, as well as the electric cable (120), the connection between the counter-connector (130) of the electric charging device (100) and the connector (1040) of the active system (1010).

## Claims

1. Electric charging device (100) for a window lift system (1000) for vehicle doors, wherein the window lift system (1000) comprises an active system (1010) comprising an active glass window (1020) and window wiring (1030) comprising a connector (1040), and a rail (1050) on which said active glass window (1020) moves, wherein the active glass window (1020) is configured to darken by receiving a current flow through the window wiring (1030), wherein the electric charging device (100) comprises:
- a cable dispenser (110) comprising retractable means,
- an electric cable (120) configured to be housed in the cable dispenser (110), wherein the cable dispenser (110) allows the extension and retraction of the electric cable (120) by means of the retractable means during the movement of the active glass window (1020) along the rail (1050),
- wherein the electric cable (120) comprises:
∘ a first end (A) connectable to a current source providing current flow; and
∘ a second end (B) connected to a counter-connector (130);
- wherein the counter-connector (130) is configured to be connectable to the connector (1040) of the active system (1010) establishing an electrical circuit between the current source and the active glass window (1020) allowing the passage of the current flow, and
- wherein the current flow of the electrical circuit acts on the active glass window (1020) causing the darkening of the active glass window (1020).

2. Electric charging device (100) according to claim 1, wherein the cable dispenser (110) is configured to be connectable:
- to the rail (1050),
- to a drag car (1060) of the window lift system (1000),
- to the active glass window (1020) via a bracket (160) configured to support the cable dispenser (110); or
- to a vehicle door.

3. Electric charging device (100) according to claims 1 or 2, wherein the first end (A) of the electric cable (120) comprises a charging connector (150) connectable to the energy source.

4. Electric charging device (100) according to claims 1 to 3, further comprising a passive element (140) configured to reduce mechanical stress on the electric cable (120).

5. Electric charging device (100) according to the preceding claim, wherein the passive element (140) comprises one or more fixing clips, flanges or fixing elements, preferably slots or labyrinths, and wherein the one or more fixing clips is connectable to the vehicle door.

6. Window lift system (1000) for vehicle doors, wherein the window lift system (1000) comprises:
- the electric charging device (100) according to claims 1 to 5;
- an active system (1010) comprising an active glass window (1020) and window wiring (1030) comprising a connector (1040);
- a drag car (1060) for the active glass window (1020); and
- a rail (1050) on which said active glass window (1020) moves by means of the drag car (1060).

7. Window lift system (1000) for vehicle doors according to claim 6, wherein the cable dispenser (110) is connected:
- to the rail (1050); or
- to the drag car (1060) of the active glass window (1020); or
- to the active glass window (1020) via a bracket (160) configured to support the cable dispenser (110); or
- to a vehicle door.

8. Window lift system (1000) for vehicle doors according to claims 6 or 7, wherein the window lift system (1000) also comprises an engine (1070) configured to cause the movement of the active glass window (1020) on said rail (1050) by means of the drag car (1060).
